(19) **Europäisches Patentamt**
**European Patent Office**
**Office européen des brevets**

(11) **EP 3 340 172 A1**

(12) **EUROPEAN PATENT APPLICATION**

(43) Date of publication:
**27.06.2018 Bulletin 2018/26**

(51) Int Cl.:
***G06T 7/246*** *(2017.01)*      ***G06T 7/277*** *(2017.01)*
***G06T 7/579*** *(2017.01)*

(21) Application number: **16206864.7**

(22) Date of filing: **23.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Vestel Elektronik Sanayi ve Ticaret A.S.**
**45030 Manisa (TR)**

(72) Inventor: **KILIC, Selcuk**
**45030 Manisa (TR)**

(74) Representative: **Ascherl, Andreas et al**
**KEHL, ASCHERL, LIEBHOFF & ETTMAYR**
**Patentanwälte - Partnerschaft**
**Emil-Riedel-Strasse 18**
**80538 München (DE)**

(54) **METHOD FOR FEATURE MAPPING AND CONTROL DEVICE**

(57) The present invention provides a method for feature mapping for three-dimensional localization with two images (4, 5), the method comprising randomly (S1) selecting a first number of points in the second image (5), determining (S2) model parameters for a temporary transformation model (6) as if the randomly selected points in the second image (5) would represent a wanted feature of the first image (4), calculating (S3) the number of inliers for the temporary transformation model (6) with the determined parameters, repeating (S4) the steps of selecting, determining and calculating a second number of times, and updating (S5) a final transformation model (7) based on the temporary model with the highest number of inliers after repeating a second number of times. Further, the present invention provides a respective control device (1).

Fig. 1

## Description

### TECHNICAL FIELD

The invention relates to a method for feature mapping for three-dimensional localization and a corresponding control device.

### BACKGROUND

Although applicable to any system that uses machine vision, the present invention will be mainly described in conjunction with control systems for autonomous machines.

The task of localization or simultaneous localization and mapping is an important aspect in robotics developments or developments of autonomous systems in general. There exist approaches that either rely on, or stem from noise filtering techniques, especially the Extended Kalman Filter method or Particle Filtering methods. With these methods localization problems are downgraded to a data association problem after using the mentioned filters.

With the help of the above, simultaneously building a structural map of the surrounding environment and localization has become possible. Such vision based localization systems have huge potential in terms of providing low cost and flexible 3D location sensing, capable of operating with agile hand held devices and in previously unseen environments. Applications are numerous, particularly in areas such as augmented and virtual reality, in which positioning and tracking technology play a key role. However, a requirement for this potential to be realized is that these systems need to operate reliably and robustly in the presence of natural human motions, including rapid accelerations, erratic motion and sudden changes in viewpoint.

Accordingly, there is a need for an improved resistance to these real-world motion characteristics.

### SUMMARY

The present invention provides a method with the features of claim 1 and a control device with the features of claim 8.

Accordingly a method is provided for feature mapping for three-dimensional localization with two images, the method comprising randomly selecting a first number of points in the second image, determining model parameters for a temporary transformation model as if the randomly selected points in the second image would represent a wanted feature of the first image, calculating the number of inliners, or consistent points, for the temporary transformation model with the determined parameters, repeating the steps of selecting, determining and calculating a second number of times, and updating a final transformation model based on the temporary model with the highest number of inliners after repeating a second number of times.

Further a control device is provided for feature mapping for performing three-dimensional localization with two images, the device comprising an image acquiring device configured to acquire a first and a second image, and a control unit configured to randomly select a first number of points in the second image, determine model parameters for a temporary transformation model as if the randomly selected points in the second image would represent a wanted feature of the first image, and calculate the number of inliners for the temporary transformation model with the determined parameters, wherein the control unit is configured to repeat selecting, determining and calculating a second number of times, and to update a final transformation model based on the temporary model with the highest number of inliners after repeating a second number of times.

The present invention improves the data association stage of visual localization systems. Data association in this context is the process of obtaining correct feature correspondences between any two images and is vital for stable operation of a localization and mapping algorithm. In contrast to previous approaches the present invention does not rely on simple, not very discriminative matching that leads to the selection of erroneous measurements, especially during fast or erratic motions. Therefore, the present invention provides an improved features matching or data association.

The present invention is based on a RANSAC algorithm.

RANSAC is an abbreviation for "RANdom SAmple Consensus". It is an iterative method to estimate parameters of a mathematical model from a set of observed data points, which may contain outliners. It is a non-deterministic algorithm in the sense that it produces a reasonable result only with a certain probability, with this probability increasing as more iterations are allowed. The algorithm was first published by Fischler and Bolles in 1981. The basic assumption is that the data consists of "inliners", i.e., data points whose distribution can be explained by some mathematical model, and "outliners" which are data points that do not fit the model. Outliners could be considered points which come from noise, erroneous measurements or simply incorrect data. RANSAC also assumes that, given a set of inliners, there exists a procedure which can estimate the parameters of a model that optimally explains or fits this data. The basic algorithm is summarized as follows:

- Select randomly the subset of points required to determine the model
- Calculate the model
- Determine how many points from the set of all points fit with a predefined tolerance
- If the fraction of the number of inliners is over the current maximum, update the loop limit and set the new maximum according to the current maximum
- repeat first four steps until loop limit is reached

The number of iterations, $N_{hyp}$, is chosen high enough to ensure a probability p (usually set to 0.99 but can be lowered) that at least one of the sets of random samples does not include an outliner. Let u represent the probability that any selected data point is an inliner and v = 1 - u the probability of observing an outliner. $N_{hyp}$ iterations of the minimum number of points denoted m are required, where

$$1 - p = \left(1 - u^m\right)^{N_{hyp}}$$

and thus with some manipulation,

$$N_{hyp} = \frac{\log\left(1 - p\right)}{\log\left(1 - u^m\right)}$$

The present invention now uses a specific variant of the RANSAC, the 1-Point RANSAC for EKF.

This variant is a complete SLAM, Simultaneous Localization and Mapping, which integrates extended Kalman filtering steps into an iterative model selection based on RANSAC. RANSAC is a non-deterministic method as it tests many hypothesis, e.g. models, which are initiated by randomly selected samples. The algorithm can be summarized as follows:

1. Randomly select the points, and determine model parameters. (number of the points is m)
2. Determine the number of inliner for the selected model.
3. Repeat first two steps enough number, $N_{hyp}$, times.
4. Choose the model with highest number of inliner, discard others.
5. Update model parameters using selected model.

For RANSAC the number of required hypotheses ($N_{hyp}$) is the most critical parameter that defines the number of iterations. And the relation between $N_{hyp}$ and m is given as:

$$N_{hyp} = \frac{log(1 - p)}{log(1 - (1 - \epsilon)^m)}$$

The 1-Point RANSAC can be described in the following tabular form:

1 initialize hypothesis number ($N_{hyp}$) as a big value
2 randomly pick one match and update model
3 reproject all matches by using new model
4 calculate Euclidian distances for each pair of points of the first image and the transformed second image
5 mark pairs as inliner or outliner by using a threshold
6 if the inliner number is more than inliner set1 then update inliner set1 as inliner and update $N_{hyp}$
7 repeat steps 2-6 $N_{hyp}$ times
8 update model by using inliner set1
9 reproject all matches of outliner set1 by using new model
10 calculate Euclidian distances for each pairs
11 mark pairs as inliner or outliner by using a threshold
12 if the inliner number is more than inliner set2 then update inliner set2 as inliner and update $N_{hyp}$

13 merge both inliner sets

where p is the probability that at least one spurious-free hypothesis has been tested, and $\varepsilon$ is the outliners ratio and m the minimum number of data points necessary to instantiate the model. Therefore the hypotheses number is lowered exponentially by lowering m.

By this fact the method uses one point and prior information of the state. In the algorithm a sample match is selected randomly from all available matches for that frame. Using that match and prior state information a new state is calculated by the help of the EKF update procedure. Then by projecting all the matches the distance between the feature point and the landmark is calculated. If the distance is lower than a threshold, the pair is marked as an inliner. If the inliner number is higher than a stored number the stored number is updated, this number may be called hypothesis number. As a second stage of the algorithm a new state is calculated by using the inliners, and all steps are repeated on the outliners.

Further embodiments of the present invention are subject of the further subclaims and of the following description, referring to the drawings.

In one embodiment, the transformation model can comprise an Extended Kalman Filter based model.

Kalman Filters (KF) are a form of process state estimator as a predictor-corrector loop. The aim of the KF is to estimate unmeasured states and the actual process outputs by solving below two equations at the same time.

$$x_k = A_k * x_{k-1} + B_k * u_k + w_{k-1}$$

$$y_k = C_k * x_k + v_k$$

KF assumes that $A_k$, $B_k$, $C_k$ are constant matrices and the noises $w_k$, $v_k$ are independent of each other. The Kalman filter uses a two step predictor-corrector algorithm. The first step involves projecting both the most recent state estimate and an estimate of the error covariance (from the previous time period) forward in time to compute a predicted (or a-priori) estimate of the states at the current time.

$$\hat{x_k^-} = A_k * \hat{x_{k-1}} + B_k * u_k$$

$$P_k^- = A_k * P_{k-1} A_k^T + Q_k$$

The second step involves correcting the predicted state estimate calculated in the first step by incorporating the most recent process measurement to generate an updated (or a-posteriori) state estimate.

$$K_k = P_k^- * C_k^T * (C_k * P_k^- * C_k^T + R_k)^{-1}$$

$$\hat{x_k} = \hat{x_k^-} + K_k * (y_k - C_k + \hat{x_k^-})$$

$$P_k = (I - K_k * C_k) * P_k^-$$

In the above equations $P_k$ is an estimate of the covariance of the measurement error and $K_k$ is called the Kalman gain.

The drawback of KF is the necessity of linearity of system equations. To overcome this necessity, second and higher order terms of system equations are replaced by Taylor expansion replacements and linearity is conserved. And the system functions are generalized as:

4

$$x_k = f(x_{k-1}, u_k, k) + w_{k-1}$$

$$y_k = h(x_k, u_k, k) + v_k$$

However, due to the non-linear nature of the process being estimated the covariance prediction and update equations cannot use f and h directly. Rather they use the Jacobian of f and h. As with the original Kalman Filter, the Extended Kalman Filter uses a two-step predictor-corrector algorithm. The first step involves projecting both the most recent state estimate and an estimate of the error covariance (from the previous time period) forward in time to compute a predicted (or a-priori) estimate of the states at the current time.

$$\hat{x}_k^- = f(\hat{x}_{k-1}, u_k, k)$$

$$P_k^- = F_{k-1} * P_{k-1} * F_{k-1}^T + Q_k$$

where:

$$F_k = \frac{\partial f}{\partial x}\bigg|_{(\hat{x}_k, u_k, k)}$$

The second step involves correcting the predicted state estimate calculated in the first step by incorporating the most recent process measurement to generate an updated (or a-posteriori) state estimate.

$$K_k = P_k^- * H_k^T * (H_k * P_k^- * H_k^T + R_k)^{-1}$$

$$\hat{x}_k = \hat{x}_k^- + K_k * (y_k - h(\hat{x}_k^-, u_k, k))$$

$$P_k = (I - K_k * H_k) * P_k^-$$

where:

$$H_k = \frac{\partial h}{\partial x}\bigg|_{(\hat{x}_k, u_k, k)}$$

In the above equations $P_k$ is an estimate of the covariance of the measurement error and $K_k$ the Kalman gain. If the process is linear then the above equations collapse to the equations of the original (i.e. linear) Kalman Filter. However, unlike the Kalman Filter, the Extended-Kalman Filter is not optimal in every sense. And further, if the process model is inaccurate then due to the use of the Jacobians - which essentially represent a linearization of the model - the Extended-Kalman Filter will likely diverge.

In practice, the Extended-Kalman Filter can lead to very reliable state estimation. This is particularly the case when the process being estimated can be accurately linearized at each point along the trajectory of the states.

In one embodiment, determining the model parameters can comprise calculating a fundamental matrix.

In another embodiment, the fundamental matrix, F, can be defined as:

$$F = (K^T)^{-1}*R*[R^Tt]_x*K^{-1}$$

In stereo vision the application of projective geometry to this situation results in the epipolar geometry approach. Three points COP1, COP2, P form what is called an epipolar plane and the intersections of this plane with the two image planes form the epipolar lines. The line connecting the two centers of projection COP1, COP2 intersects the image planes at the conjugate points $e_1$ and $e_2$ which are called epipoles. For a 3D point P, that projects into the two image planes as the points $p_1$ and $p_2$ which are expressed in homogeneous coordinates $u_1$, $v_1$, 1 and $u_2$, $v_2$, 1 respectively. After some manipulations, the main result of the epipolar geometry is that the following linear relationship can be written.

$$(p_1)^t * F * p_2 = 0$$

Here, F is the so-called fundamental matrix which is a 3 x 3 entity with 9 parameters. However, it is constrained to have rank 2 (i.e. IIFII = 0) and can undergo an arbitrary scale factor. Thus, there are only 7 degrees of freedom in F. It defines the geometry of the correspondences between two views in a compact way, encoding intrinsic camera geometry as well as the extrinsic relative motion between the two cameras. In addition, the structure of the scene is eliminated from the estimation of F and can be recovered in a separate step. Given the matrix F, identifying a point in one image identifies a corresponding epipolar line in the other image.

The fundamental matrix defines the replacement of corresponding pixels in different frames. In the described method the fundamental matrix is calculated by using the model (EKF update output) by using the above formula.

With the help of the fundamental matrix data association is basically an inliner detection. This definition also holds for the Fundamental Matrix calculation. The present method also utilizes RANSAC to test subgroups of required size.

1 initialize hypothesis number ($N_{hyp}$) as a big value
2 randomly pick m matches and calculate fundamental matrix
3 calculate epipolar consistency
4 mark pairs as inliner or outliner by using a threshold
5 if the inliner number is more than a stored inliner set then update the stored inliner set as inliner and update $N_{hyp}$
6 repeat steps 2-5 $N_{hyp}$ times

The flow can also be summarized as:

1. Randomly select the points, and determine Fundamental matrix. (Number of the points is m)
2. Determine the number of inliner for the selected model.
3. Repeat first two steps enough number, $N_{hyp}$, times.
4. Choose the model with highest number of inliner, discard others.
5. Update model parameters using selected inliner.

The output of this algorithm is the model (Fundamental matrix) and an inliner set. Fundamental matrix determination requires a determined size of input points. Therefore large size requirements make RANSAC to test many combinations.

In one embodiment, the relation between first number, m, and the second number, $N_{hyp}$, can be given as:

$$N_{hyp} = \log(1-p)/\log(1-(1-\varepsilon)^m)$$

In one embodiment, calculating the number of inliners can comprise calculating Euclidian distances for all pairs of points of the first image and the respective points of the second image transformed with the temporary transformation model, and determining a pair of points to be an inliner if the Euclidian distance is below a predetermined threshold value.

In one embodiment, repeating an iteration of selecting, determining and calculating may only be counted for the comparison with the second number of times, if the number of inliners for the temporary transformation model of the recent iteration is higher than the number of inliners during the last iteration.

The method of the present invention is selected to be of probabilistic typed because the deterministic ones can propagate position and measurement uncertainties further. Probabilistic approaches might lower the failures by applying a try-see concept. However this gain must be over-bound as incrementing the number of trials may increase success ratio but also increases the time exponentially. For this reason the parameters that have effect on this ratio must be selected with the application scenario in mind. The method is based on RANSAC algorithm to generate subsets of measurement points to update e.g. of robot position by the help of EKF update and to check the consistency. The subsets are used to generate a model or the robot position. Then this model is used to find the consistent points out of the measurements for associated frames. The model generation is achieved by an EKF update procedure. The selected subset and the outputs of EKF prediction, prior to the data association, are the inputs of this step. The Output position of EKF update is the model to be used in consistency calculations. The next step is to count consistent points. To calculate it all the map landmarks which match to current feature points are projected to frame coordinates using the model. Then the distances are calculated between feature points and reprojected landmark matches by using $(p_1)' * F * p_2$ formula. In this formula $p_1$ and $p_2$ are measurements and landmark projections and F is the fundamental matrix calculated by the model. The matches which have distances lower than a threshold are assumed to be consistent. This threshold is a predetermined value, which is set according to the used sensors and the application environment. Lowering the value will lower the probability that the chosen match will be consistent. Therefore more selections will be tested.

## BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:

Fig. 1 shows a flow diagram of an embodiment of a method according to the present invention;

Fig. 2 shows a flow diagram of another embodiment of a method according to the present invention;

Fig. 3 shows a block diagram of an embodiment of a control device according to the present invention; and

Fig. 4 shows an epiplanar geometry.

In the figures like reference signs denote like elements unless stated otherwise.

## DETAILED DESCRIPTION OF THE DRAWINGS

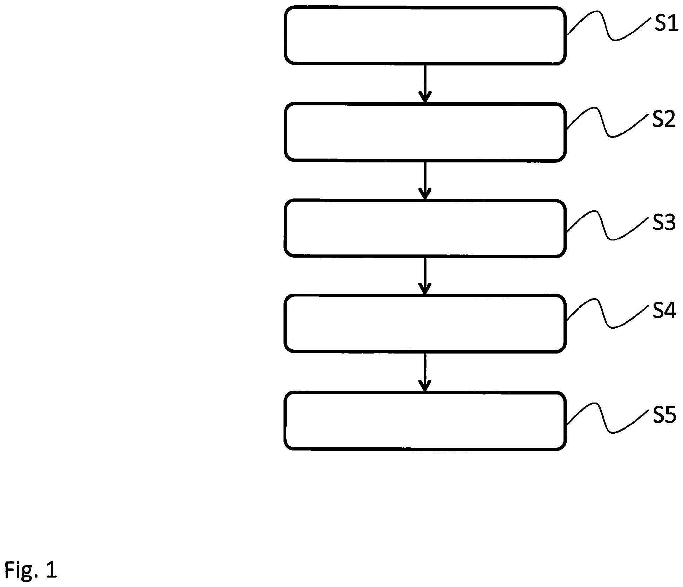

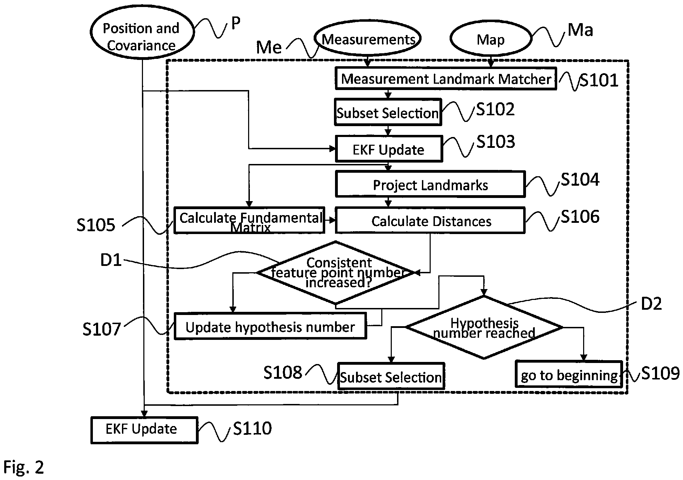

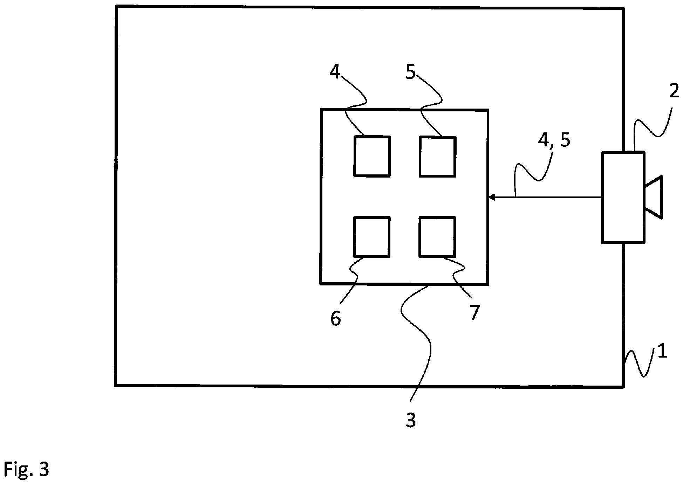

For ease of understanding, the reference signs of the control device of Fig. 3 will be used in the description of the method-based Figs. 1 and 2.

Fig. 1 shows a flow diagram of an embodiment of a method for feature mapping for three-dimensional localization with two images 4, 5.

The method comprises randomly S1 selecting a first number of points in the second image 5. Further, model parameters for a temporary transformation model 6 are determined S2 as if the randomly selected points in the second image 5 would represent a wanted feature of the first image 4.

With the determined parameters the number of inliners for the temporary transformation model 6 is calculated S3. Calculating S3 the number of inliners may comprise calculating Euclidian distances for all pairs of points of the first image 4 and the respective points of the second image 5 transformed with the temporary transformation model 6, and determining a pair of points to be an inliner if the Euclidian distance is below a predetermined threshold value.

The steps of selecting, determining and calculating are repeated S4 a second number of times. The relation between first number, m, and the second number, $N_{hyp}$, may be given as:

$$N_{hyp} = \log(1-p)/\log(1-(1-\varepsilon)^m)$$

Repeating S4 an iteration of selecting, determining and calculating may e.g. only be counted for the comparison with the second number of times, if the number of inliners for the temporary transformation model 6 of the recent iteration is higher than the number of inliners during the last iteration.

Finally, a final transformation model 7 is updated S5 based on the temporary model with the highest number of inliners after repeating a second number of times.

The transformation model can e.g. comprise an Extended Kalman Filter based model, and determining S2 the model parameters can comprise calculating a fundamental matrix S106. The fundamental matrix, F, can be defined as:

$$F = (K^T)^{-1} * R * [R^T t]_x * K^{-1}$$

Fig. 2 shows another flow diagram of an embodiment of a method for feature mapping for three-dimensional localization with two images 4, 5.

The method may e.g. be used in robot position determination in a robot controller. The method uses the last determined position, and the covariance matrix P as well as measurements Me, i.e. image data, and a feature map Ma as input data.

The method is based on a RANSAC algorithm to generate S102 subsets of measurement points to update robot position by the help of EKF update S103 and to check the consistency D1.

The subsets are used to generate S103 the model or robot position. The model generation is achieved by an EKF update procedure. Then this model is used to find S104, S105, S106 the consistent points out of the measurements for an associated frame. The selected subset and outputs of the EKF prediction in steps S102, S103, prior to the data association are the inputs of this step. The output position of the EKF update is the model to be used in consistency calculations.

The next step is to count consistent points. To calculate it, all the map landmarks which match to the current feature points are projected S104 to frame coordinates using the model. Then the distances are calculated S106 between feature points and reprojected landmark matches by using the formula $(p_1)' * F * p_2$. In this formula $p_1$ and $p_2$ are measurements and landmark projections and F is the fundamental matrix calculated by the model. The matches which have distances lower than a threshold are assumed to be consistent. This threshold is a predetermined value, which is set according to the used sensors and an application environment. Lowering the value will lower the probability that the chosen match will be consistent. Therefore more selections will be tested.

If the required number of consistent points is reached D2, subset selection of the subsets with the most consistent points is performed S108. Otherwise a jump S109 for new subset selection is performed. With the selected subsets finally, the EKF update S110 is performed.

Fig. 3 shows a block diagram of an embodiment of a control device 1 for feature mapping for performing three-dimensional localization with two images 4, 5.

The control device comprises an image acquiring device 2 configured to acquire a first image 4 and a second image 5, and a control unit 3 configured to randomly select a first number of points in the second image 5, determine model parameters for a temporary transformation model 6 as if the randomly selected points in the second image 5 would represent a wanted features of the first image 4, and calculate the number of inliners for the temporary transformation model 6 with the determined parameters.

The control unit 3 is further configured to repeat the steps of selecting, determining and calculating a second number of times, and to update a final transformation model 7 based on the temporary model with the highest number of inliners after repeating a second number of times. The control unit 3 may be configured to only count an iteration of selecting, determining and calculating for the comparison with the second number of times, if the number of inliners for the temporary transformation model 6 of the recent iteration is higher than the number of inliners during the last iteration.

The control unit 3 may be configured to provide the transformation model as an Extended Kalman Filter based model. Further, the control unit 3 may be configured to determine the model parameters by calculating a fundamental matrix F, especially as:

$$F = (K^T)^{-1} * R * [R^T t]_x * K^{-1}$$

The control unit 3 may be configured to provide the first number, m, and the second number, $N_{hyp}$, based on the relation $N_{hyp} = \log(1-p)/\log(1-(1-\varepsilon)^m)$.

Further, the control unit 3 may calculate the number of inliners by calculating Euclidian distances for all pairs of points of the first image 4 and the respective points of the second image 5 transformed with the temporary transformation model 6, and determine a pair of points to be an inliner if the Euclidian distance is below a predetermined threshold value.

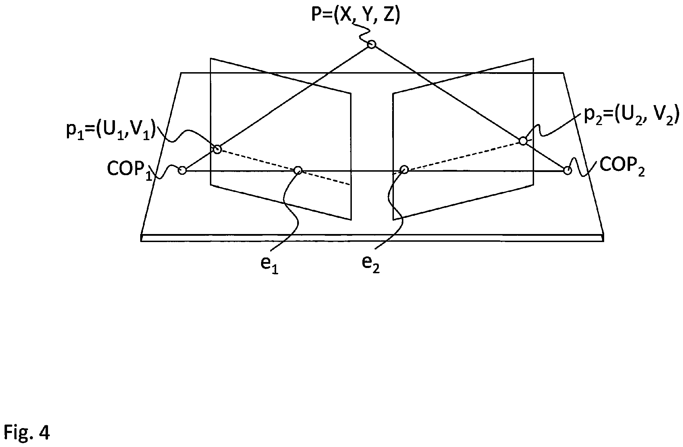

Fig. 4 shows an epiplanar geometry. In stereo vision the application of projective geometry results in the epipolar geometry approach. Three points COP1, COP2, P form what is called an epipolar plane and the intersections of this plane with the two image planes form the epipolar lines. The line connecting the two centers of projection COP1, COP2 intersects the image planes at the conjugate points $e_1$ and $e_2$ which are called epipoles. For a 3D point P, that projects into the two image planes as the points $p_1$ and $p_2$ which are expressed in homogeneous coordinates $u_1$, $v_1$, 1 and $u_2$,

$v_2$, 1 respectively. After some manipulations, the main result of the epipolar geometry is that the following linear relationship can be written.

$$(p_1)^t * F * p_2 = 0$$

Here, F is the so-called fundamental matrix which is a 3 x 3 entity with 9 parameters. However, it is constrained to have rank 2 (i.e. IIFII = 0) and can undergo an arbitrary scale factor. Thus, there are only 7 degrees of freedom in F. It defines the geometry of the correspondences between two views in a compact way, encoding intrinsic camera geometry as well as the extrinsic relative motion between the two cameras. In addition, the structure of the scene is eliminated from the estimation of F and can be recovered in a separate step. Given the matrix F, identifying a point in one image identifies a corresponding epipolar line in the other image.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a method for feature mapping for three-dimensional localization with two images 4, 5, the method comprising randomly (S1) selecting a first number of points in the second image 5, determining (S2) model parameters for a temporary transformation model 6 as if the randomly selected points in the second image 5 would represent a wanted feature of the first image 4, calculating (S3) the number of inliners for the temporary transformation model 6 with the determined parameters, repeating (S4) the steps of selecting, determining and calculating a second number of times, and updating (S5) a final transformation model 7 based on the temporary model with the highest number of inliners after repeating a second number of times. Further, the present invention provides a respective control device 1.

## List of reference signs

1       control device
2       image acquiring device
3       control unit
4, 5    images
6       temporary transformation model
7       final transformation model

P     position and covariance
Me    measurements
Ma    map

S1 - S5        method steps
S101 - S110    method steps

## Claims

**1.**   Method for feature mapping for three-dimensional localization with two images (4, 5), the method comprising:

randomly selecting (S1) a first number of points in the second image (5),
determining (S2) model parameters for a temporary transformation model (6) as if the randomly selected points in the second image (5) would represent a wanted feature of the first image (4),
calculating (S3) the number of inliners for the temporary transformation model (6) with the determined parameters,

repeating (S4) the steps of selecting, determining and calculating a second number of times,
updating (S5) a final transformation model (7) based on the temporary model with the highest number of inliners after repeating a second number of times.

**2.** Method according to claim 1, wherein the transformation model comprises an extended Kalman Filter based model.

**3.** Method according to claim 2, wherein determining (S2) the model parameters comprises calculating a fundamental matrix (S106).

**4.** Method according to claim 3, wherein the fundamental matrix, F, is defined as:

$$F = (K^T)^{-1}*R*[R^Tt]_x*K^{-1}$$

**5.** Method according to any one of the preceding claims, wherein the relation between first number, m, and the second number, $N_{hyp}$, is given as:

$$N_{hyp} = \log(1-p)/\log(1-(1-\varepsilon)^m)$$

**6.** Method according to any one of the preceding claims, wherein calculating (S3) the number of inliners comprises calculating Euclidian distances (S105) for all pairs of points of the first image (4) and the respective points of the second image (5) transformed with the temporary transformation model (6), and determining (D1) a pair of points to be an inliner if the Euclidian distance is below a predetermined threshold value.

**7.** Method according to any one of the preceding claims, wherein repeating (S4) an iteration of selecting, determining and calculating is only counted for the comparison with the second number of times, if the number of inliners for the temporary transformation model (6) of the recent iteration is higher than the number of inliners during the last iteration.

**8.** Control device (1) for feature mapping for performing three-dimensional localization with two images (4, 5), the device comprising:

an image acquiring device (2) configured to acquire a first image (4) and a second image (5), and
a control unit (3) configured to randomly select a first number of points in the second image (5), determine model parameters for a temporary transformation model (6) as if the randomly selected points in the second image (5) would represent a wanted features of the first image (4), and calculate the number of inliners for the temporary transformation model (6) with the determined parameters,

wherein the control unit (3) is configured to repeat the steps of selecting, determining and calculating a second number of times, and to update a final transformation model (7) based on the temporary model with the highest number of inliners after repeating a second number of times.

**9.** Control device (1) according to claim 8, wherein the control unit (3) is configured to provide the transformation model as an Extended Kalman Filter based model.

**10.** Control device (1) according to claim 9, wherein the control unit (3) is configured to determine the model parameters by calculating a fundamental matrix.

**11.** Control device (1) according to claim 10, wherein the control unit (3) is configured to calculate the fundamental matrix, F, as:

$$F = (K^T)^{-1}*R*[R^Tt]_x*K^{-1}$$

**12.** Control device (1) according to any one of the preceding claims 8 to 11, wherein the control unit (3) is configured to provide the first number, m, and the second number, $N_{hyp}$, based on the relation:

$$N_{hyp} = \log(1\text{-}p)/\log(1\text{-}(1\text{-}\varepsilon)^m)$$

13. Control device (1) according to any one of the preceding claims 8 to 12, wherein the control unit (3) is configured to calculate the number of inliners by calculating Euclidian distances for all pairs of points of the first image (4) and the respective points of the second image (5) transformed with the temporary transformation model (6), and determining a pair of points to be an inliner if the Euclidian distance is below a predetermined threshold value.

14. Control device (1) according to any one of the preceding claims 8 to 13, wherein the control unit (3) is configured to only count a an iteration of selecting, determining and calculating for the comparison with the second number of times, if the number of inliners for the temporary transformation model (6) of the recent iteration is higher than the number of inliners during the last iteration.

Fig. 1

Fig. 2

Fig. 3

$P=(X, Y, Z)$

$p_1=(U_1, V_1)$

$p_2=(U_2, V_2)$

$COP_1$

$COP_2$

$e_1$

$e_2$

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAVIER CIVERA ET AL: "1-Point RANSAC for extended Kalman filtering: Application to real-time structure from motion and visual odometry", JOURNAL OF FIELD ROBOTICS, vol. 27, no. 5, 24 May 2010 (2010-05-24), pages 609-631, XP055370031, US ISSN: 1556-4959, DOI: 10.1002/rob.20345 | 1-6,8-13 | INV. G06T7/246 G06T7/277 G06T7/579 |
| Y | * page 613, right-hand column, line 24 - line 26 * <br> * page 614, Algorithm 1 * | 7,14 | |
| A | VAN CUONG NGUYEN ET AL: "1-Point Ransac Based Robust Visual Odometry", JOURNAL OF POSITIONING, NAVIGATION, AND TIMING, vol. 2, no. 1, 30 April 2013 (2013-04-30), pages 81-89, XP055370129, ISSN: 2288-8187, DOI: 10.11003/JKGS.2013.2.1.081 * page 84, right-hand column, paragraph 2 * | 3,4,10, 11 | |
| Y | VLAMINCK MICHIEL ET AL: "Obstacle detection for pedestrians with a visual impairment based on 3D imaging", 2013 INTERNATIONAL CONFERENCE ON 3D IMAGING, IEEE, 3 December 2013 (2013-12-03), pages 1-7, XP032562704, DOI: 10.1109/IC3D.2013.6732091 [retrieved on 2014-02-04] * page 3, left-hand column, line 22 - line 26 * | 7,14 | TECHNICAL FIELDS SEARCHED (IPC) <br><br> G06T |

The present search report has been drawn up for all claims

| Place of search | Date of completion of the search | Examiner |
|---|---|---|
| Munich | 15 May 2017 | Winkler, Gregor |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)